Europäisches Patentamt

European Patent Office

Office européen des brevets

(19)

(11) Publication number: **0 128 776**
A2

# EUROPEAN PATENT APPLICATION

(21) Application number: **84303978.5**

(22) Date of filing: **13.06.84**

(51) Int. Cl.³: **F 16 H 25/22**

(30) Priority: **13.06.83 IE 1378/83**

(43) Date of publication of application: **19.12.84**
Bulletin 84/51

(84) Designated Contracting States: **AT BE CH DE FR GB IT LI LU NL SE**

(71) Applicant: **INSTITUTE FOR INDUSTRIAL RESEARCH AND STANDARDS, Ballymun Road, Ballymun, Dublin 9 (IE)**

(72) Inventor: **Comerford, Michael, Farnagh 37 York Road, Dun Laoire Co. Dublin (IE)**
Inventor: **Sharp, Roy Terence, "Bellavista" Ballyman Road, Countybrook Enniskerry Co. Wicklow (IE)**

(74) Representative: **Nettleton, John Victor et al, Abel & Imray Northumberland House 303-306 High Holborn, London, WC1V 7LH (GB)**

(54) **Ball screw mechanism.**

(57) The invention relates to a ball screw mechanism, in particular, a mechanism comprising a pair of nuts which may be adjusted relative to each other with a preload torque for use in a machine tool.

Essentially, the mechanism (1) comprises a screw shaft (2) and pair of nuts (4) and (5). A spigot (14) on the nut (4) co-operates with a socket (15) on the nut (5). Vernier adjustment means provided by recesses (17) and (18) on the spigot and socket (14) and (15) accommodate adjustment between the nuts (4) and (5). A locking pin (20) engagable with an aligned pair of recesses (17) and (18) locks the nuts together in the desired position after preloading.

In another embodiment of the invention holes extend inwardly from abutting ends of each nut (4) and (5) to form the vernier adjusting means. A locking pin engages an aligned pair of holes.

0128776

The present invention relates to ball screw mechanisms of the type comprising a pair of co-operating nuts, vernier adjusting means on each nut to adjust the nuts relative to each other for preloading the nuts, and locking means engagable with the vernier adjusting means to lock the nuts relative to each other.

In general, such ball screws are used as preloaded ball screws in machine tools to reduce or eliminate backlash. They comprise a rotatable screw shaft mounted on the bed of the machine tool and a pair of ball nuts on the shaft which are attached to a saddle of a machine tool for moving the saddle longitudinally relative to the screw shaft. The nuts are preloaded by displacing one nut relative to the other to induce a tensile or compressive stress in the screw shaft. This preloading is used to increase the ball screw stiffness, which eliminates backlash between the screw and the screw shaft. In general, the nuts are tightened or loosened relative to each other, until the desired degree of stiffness on the shaft is achieved, and nuts are then locked together. Usually, vernier adjusting means are provided on each nut to accommodate final adjustment of one nut relative to the other. The vernier adjusting means usually comprises a pair of vernier gears, one gear being cut on the periphery of each nut. The gears vary in pitch usually by one tooth. The gears interengage with the nuts to lock the nuts together relative to each other. Unfortunately, ball nuts with such adjustment and locking means are relatively difficult and expensive to manufacture. Further, they tend to be relatively difficult to adjust in use.

There is therefore a need for a ball screw mechanism which overcomes the problems of such mechanisms known heretofore.

The present invention is directed towards providing such a ball screw mechanism.

The invention overcomes the problems of ball screws known heretofore by virtue of the fact that the vernier adjusting means on each nut co-operate to retain the locking means in position.

The advantage of this feature of the invention is that it provides a ball screw mechanism which is relatively easily and inexpensively manufactured. Furthermore, the ball nuts are easily and inexpensively manufactured and adjusted in use.

In one embodiment of the invention the vernier adjusting means comprises a plurality of recesses on each nut arranged about a pitch circle adjacent the abutting ends of the nut, there being at least one less recess on one nut than the other, the locking means being a pin engagable with a pair of aligned recesses, one on each nut.

The advantage of this feature of the invention is that it provides a pair of ball nuts which can be readily easily manufactured.

In another embodiment of the invention the recesses extend longitudinally and substantially parallel to the axis of each nut.

The advantage of this feature of the invention is that it leads to a pair of ball nuts which can be readily easily adjusted and assembled in use.

Preferably, the recesses in one nut overlap the recesses on the other nut, and the cross-sectional area of a pair of aligned overlapping recesses together substantially define the cross-sectional area of the locking pin.

The advantage of having the recesses overlap each other is that the combined axial length of the two nuts is reduced.

Advantageously, one nut terminates in an axially extending spigot and the other terminates in an axially extending socket to co-operate with the spigot, the recesses being provided on the outer circumferential surface of the spigot and the inner circumferential surface of the socket.

The advantage of this feature of the invention is that it leads to a relatively easily manufactured pair of ball nuts which can in use be readily easily adjusted and assembled. Further, it provides a pair of nuts of reduced axial length.

In a further embodiment of the invention each recess is of semi-circular cross-section area and the locking pin is of circular cross-sectional area.

The advantage of this feature of the invention is that it leads to a relatively easily manufactured pair of ball nuts.

In another embodiment of the invention twenty-nine recesses are provided on the spigot and thirty recesses

- 6 -

0128776

are provided on the socket.

The advantage of this feature of the invention is that it leads to relatively fine adjustment of the nuts relative to each other.

In a further embodiment of the invention the recesses are provided by a plurality of holes extending longitudinally into each nut from the abutting end faces of the nuts.

The advantage of this feature of the invention is that it provides a pair of ball nuts which are relatively easily manufactured and adjusted and consequently assembled in use.

Preferably, the cross-sectional area of the holes define the cross-sectional area of the locking pin and the locking pin is of circular cross-sectional area.

The advantage of this feature of the invention is that it permits the ball nuts to be manufactured at relatively low cost and subsequently easily assembled, and further, it ensures that the shear stress induced by the preload torque acts diametrically across the locking pin.

Advantageously, twenty holes are provided in one nut and twenty one holes are provided in the other nut.

The advantage of this feature of the invention is that it permits relatively fine adjustment between the two nuts.

The invention will be more clearly understood from the following description of some preferred embodiments thereof, given by way of example only, with reference to the accompanying drawings, in which:

Fig. 1 is a partly sectional front elevational view of a ball screw mechanism according to the invention,

Fig. 2 is a perspective view of one of the nuts of the mechanism of Fig. 1,

Fig. 3 is a perspective view of the other nut of the mechanism of Fig. 1,

Fig. 4 is a sectional view of a detail of the mechanism of Fig. 1,

Fig. 5 is a sectional view of a detail of the nuts of the ball screw mechanism of Fig. 1,

Fig. 6 is a partly sectional front elevational view of a ball screw mechanism according to another embodiment of the invention,

Fig. 7 is a perspective view of one of the nuts of the mechanism of Fig. 6,

Fig. 8 is a perspective view of the other nut of the mechanism of Fig. 6,

Fig. 9 is a sectional view of a detail of the mechanism of Fig. 6, and

Fig. 10 is a sectional view of a detail of the nuts of Fig. 6.

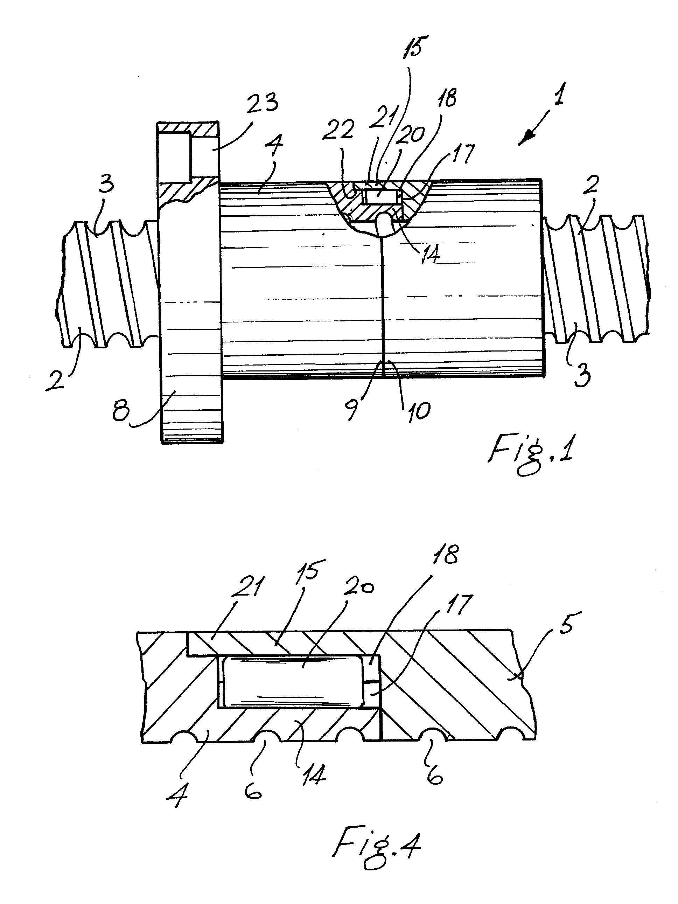

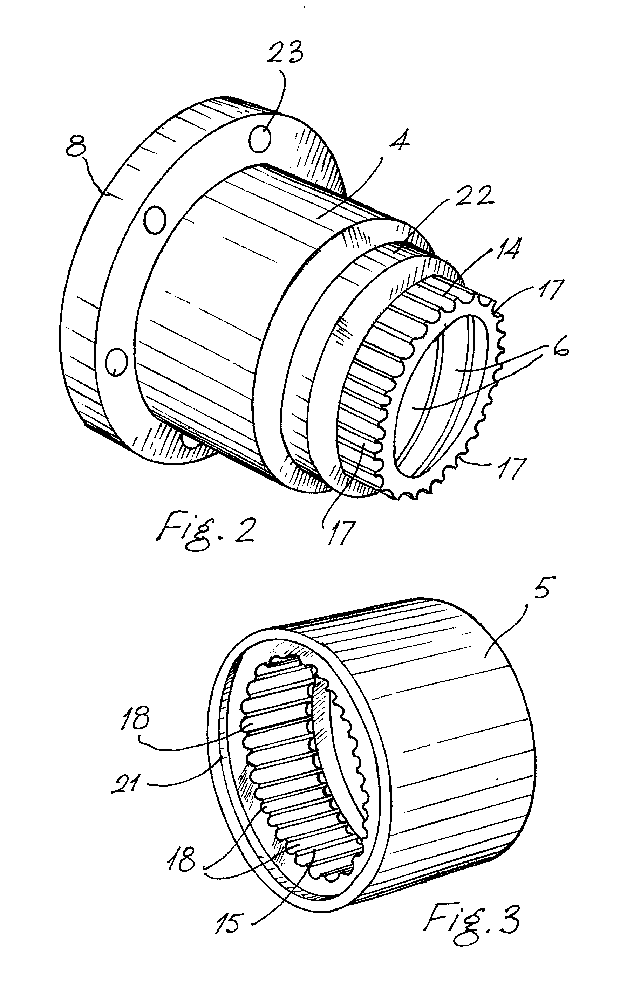

Referring to the drawings and initially to Figs. 1 to 5 thereof, there is provided a ball screw mechanism according to the invention indicated generally by the reference numeral 1. The ball screw mechanism 1 comprises a screw shaft 2, portion of which is shown, with threads 3 and a pair of co-operating ball nuts, namely, a flange nut 4 and a plain nut 5. Balls (not shown) are provided in grooves 6 in the nuts 4 and 5 to run in the threads 3 of the shaft 2. In general, the screw shaft 2 is mounted on the bed of, for example, a machine tool, say a lathe, and the ball nuts are connected to, for example, the saddle of the lathe by means of a flange 8 on the flange nut 4. Such ball screw mechanisms with two co-operating nuts will be familiar to those skilled in the art, and accordingly, it is not proposed to go into the operation of such mechanism of the nuts and shafts in further detail.

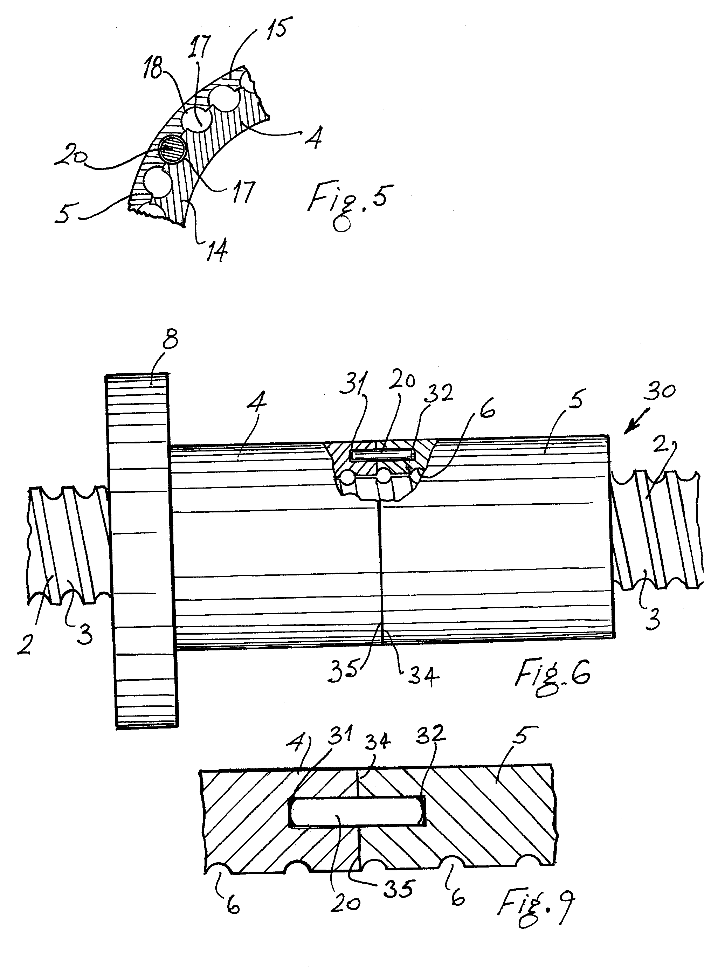

Ends 9 and 10 of the nuts 4 and 5 abut each other. The end 9 of the flange nut 4 terminates in a spigot 14 and the end 10 of the nut 5 ends in a socket 15 which co-operates with the spigot 14. Vernier means to permit relative adjustment of the nuts 4 and 5 for preloading are provided by a plurality of recesses 17 and 18 on the spigot 14 and the socket 15. The recesses 17 and 18 as can be seen in the drawings co-operate with each other and overlap. A locking means to lock the nuts in the desired position is provided in this case by a locking pin 20. The pin 20 engages a pair of aligned recesses 17 and 18, and as can be seen in Figs. 1 and 4, because the recesses 17 and 18 overlap and co-operate with each other, they retain locking pin 20 in position.

In this case, the recesses 17 and 18 are of semi-circular cross-section and the locking pin is of circular cross-sectional area. There is one less recess 17 on the flange nut 4 than there are recesses 18 on the plain nut 5. The flange nut has twenty-nine recesses 17 while the plain nut has thirty recesses 18.

To facilitate alignment between the nuts 4 and 5 the socket 15 extends at 21 beyond the recesses 18 to engage a portion 22 on the nut 4 of reduced cross-sectional area. Holes 23 are provided in the flange 8 for fixing the flange nut 4 to the saddle (not shown) of the machine tool.

In the present case the pitch of the thread 3 on the screw shaft 2 is 5 mm, and thus, the preload axial adjustment increment which may be achieved between the nuts 4 and 5 is

$$\frac{1}{29} \quad \times \quad \frac{1}{30} \quad \times \quad 5 \quad = \quad 0.00575 \text{ mm}$$

Needless to say, by varying the number of recesses any desired preload adjustment increment may be achieved. Furthermore, it will be appreciated that any desired thread pitch may be used and this would also vary the preload adjustment increment.

In use, the flange nut 4 is mounted on the screw shaft 2 and the nut 5 is mounted on a journal shaft (not shown) axially aligned with the shaft 2. The diameter of the journal shaft is similar to the route diameter of the shaft 2 to retain the balls. The threads of the nuts 4 and 5 are aligned and the locking pin 20 inserted in the aligned recesses 17 and 18. The nuts 4 and 5 are then screwed up on the shaft 2. Depending on whether more or less rigidity of the nuts 4 and 5 on the shaft 2 is desired, the nut 5 is unscrewed onto the journal shaft, and the nuts are rotated slightly relative to each other in a clockwise or anticlockwise direction. The locking pin 20 is inserted in the pair of recesses which align after the adjustment. The nuts 4 and 5 are again screwed onto the shaft 2, and if necessary removed again for further adjustment until the desired degree of stiffness is achieved. It will be appreciated that when the nuts 4 and 5 are tightened together the nuts exert a tensile load on the shaft 2.

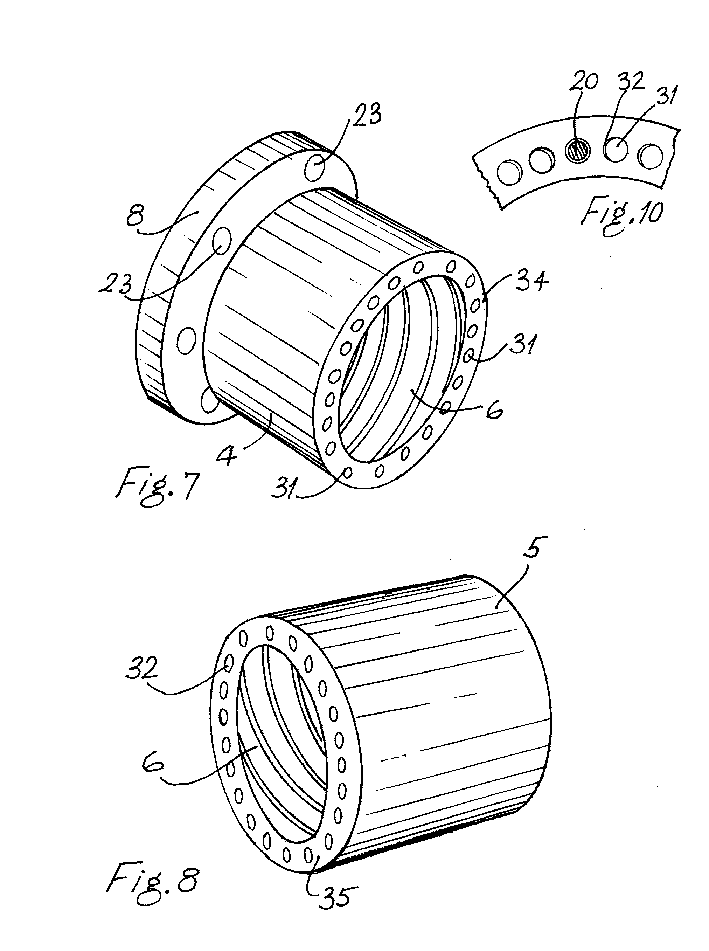

Referring now to Figs. 6 to 10 a ball screw mechanism 30 is illustrated according to another embodiment of the invention. This mechanism is substantially similar to the ball screw mechanism 1 just described and similar components indentified by the same reference numerals. The main difference between this mechanism and the ball screw mechanism 1 is in the vernier adjustment means. In this case, the vernier adjustment means are provided by a plurality of holes 31 and 32 on the flange nut 4 and plain nut 5 respectively extending longitudinally inwardly from faces 34 and 35 of the nuts 4 and 5. The holes are of circular cross-section and equi-spaced on common pitch circles co-axial with the axis of each nut 4 and 5. Twenty holes 32 are provided on the plain nut 5 and twenty one holes 31 are provided on the flange nut 4 for vernier adjustment. The locking pin 20 engages a pair of aligned holes 31 and 32 when the nuts have been adjusted to the desired preloading to lock the nuts together.

In this case, the pitch of the thread 3 of the screw shaft 2 is again  5 mm, and thus, the preload adjustment increment is

$$\frac{1}{20} \quad \times \quad \frac{1}{21} \quad \times \quad 5 \quad = \quad 0.0119 \text{ mm}$$

Again, needless to say, by varying the number of holes 31 and 32 in the nuts 4 and 5 and/or the shaft thread pitch various preload adjustment increments may be obtained.

The use of this ball screw mechanism is substantially similar to that just described. The nuts 4 and 5 are mounted on the shaft 2 and adjusted as already described to the desired rigidity to eliminate backlash.

One advantage of the embodiment of the invention described with reference to Figs. 1 to 5 is that because the recesses of the nuts 4 and 5 co-operate with each other to positively engage the locking pin 20 the shear load acts longitudinally across the locking pin, thereby

further increasing the shear stress which may be carried by the pin. This further increases the system load carrying capacity of the nuts. In fact, by lengthening the pin, the load which can be carried by the nuts may be increased.

Additionally, a further advantage of the invention is that by having a portion of one nut overlapping the portion of the other nut, namely, by virtue of the fact that the socket 15 overlaps the spigot 14, and further, the extension 21 of the socket overlaps the portion 22 of the spigot relative concentricity of the nuts is ensured.

An additional advantage of the embodiment of the invention described with reference to Figs. 1 to 5 is that because the recesses overlap each other, the combined length of the ball nuts 4 and 5 is reduced.

These advantages lead appreciately to more easily manufactured assembled and adjusted ball screws.

It will be appreciated that while the two embodiments of the invention just described have been described as having particular types and numbers of recesses and holes, any suitable shape or length of hole or recess, or any number of holes or recesses could be provided.

For example, it will be appreciated that in certain cases the holes and recesses may be of square or rectangular, or indeed triangular cross-section. Further, it will be appreciated that while the nuts have been described as having one less recess or hole on one than on the other, the nuts could be provided with two less, three less, four less or indeed any other number of holes or recesses less than on the other. In the case where one nut has two recesses or holes less than the other nut, then two pairs of holes or recesses will align when the desired adjustment has been achieved. In this case, two locking pins may be used. This would increase the axial adjustment increment, thus leading to a coarser adjustment.

Indeed, it will be appreciated that if desired, one of the nuts of the ball screw mechanism of the embodiment of the invention described with reference to Figs. 6 to 10 could be provided with a circumferentially extending flange which would form a socket to overlap the other nut of the mechanism. This would facilitate the assembly and relative concentricity of the nuts.

It is envisaged that while the vernier adjusting means and the locking means of the invention has been described for use with ball screws, it could be used for other arrangements of nuts where it is desired to lock two nuts together on a screw shaft relative to each other in a similar fashion to that just described.

Furthermore, it will be appreciated that it is not necessary to have one flange nut and one plain nut, both nuts could be flanged if desired or plain as the case may be.

Indeed, it is envisaged that while the ball screw mechanism has been described for use in machine tools, it will be appreciated that it could be used for many other uses besides machine tools.

Further, it is envisaged in certain cases that the holes 31 or 32 of either the nuts 4 and 5 of the mechanism of the embodiment of the invention described with reference to Figs. 6 to 10, could be drilled longitudinally right through the respective nut to facilitate insertion of the locking pin. Such an arrangement, it is envisaged, would permit the nuts to be assembled and locked without removal from the screw shaft.

Additionally, it is envisaged that in certain cases, in particular, where the vernier adjustment means is provided by overlapping recesses, that the recesses may be formed on a pair of rings which would be secured to each nut, such rings may be secured to the nuts, by for example, screws, or alternatively, they may be secured by being a force fit on the nuts. Manufacturing the recesses on separate rings, would considerably reduce the cost of manufacture of the nuts. In fact, in certain cases, it is envisaged that the rings with the recesses, could be manufactured from an engineering plastics material. This, it will be appreciated, would further reduce the cost of manufacturing the nuts.

0128776

## CLAIMS

1. A ball screw mechanism (1) comprising a pair of co-operating ball nuts (4,5), vernier adjusting means (17,18) on each nut to adjust the nuts (4,5) relative to each other for preloading the nuts, and locking means (20) engagable with the vernier adjusting means (17,18) to lock the nuts (4,5) relative to each other, characterised in that the vernier adjusting means (17,18) on each nut (4,5) co-operate to retain the locking means (20) in position.

2. A ball screw mechanism as claimed in claim 1 characterised in that the vernier adjusting means (17,18) comprises a plurality of recesses (17,18) on each nut (4,5) arranged about a pitch circle adjacent the abutting ends (9,10) of the nuts (4,5), there being at least one less recess (17) on one nut (4) than the other, the locking means (20) being a pin (20) engagable with a pair of aligned recesses (17, 18), one on each nut (4,5).

3. A ball screw mechanism as claimed in claim 2 characterised in that the recesses (17,18) extend longitudinally and substantially parallel to the axis of each nut (4,5).

4. A ball screw mechanism as claimed in claims 2 or 3 characterised in that the recesses (18) on one nut (5) overlap the recesses (17) on the other nut (4), and the cross-sectional area of a pair of aligned overlapping recesses (17,18) together substantially define the cross-sectional area of the locking pin (20).

5. A ball screw mechanism as claimed in claim 4 characterised in that one nut (4) terminates in an axially extending spigot (14) and the other terminates in an axially extending socket (15) to cooperate with the spigot (14), the recesses (17,18) being provided on the outer circumferential surface of the spigot (14) and the inner circumferential surface of the socket (15).

6. A ball screw mechanism as claimed in claim 5 characterised in that twenty-nine recesses (17) are provided on the spigot (14) and thirty recesses (18) are provided on the socket (15).

7. A ball screw mechanism as claimed in any of claims 2 to 6 characterised in that each recess (17,18) is of semi-circular cross-sectional area and the locking pin (20) is of circular cross-sectional area.

8. A ball screw mechanism as claimed in claim 2 characterised in that the recesses (17,18) are provided by a plurality of holes (31,32) extending longitudinally

0128776

into each nut (4,5) from the abutting end faces (34,35) of the nuts (4,5).

9. A ball screw mechanism as claimed in claim 8 charactersied in that the cross-sectional area of the holes (31,32) define the cross-sectional area of the locking pin (20) and the locking pin (20) is of circular cross-sectional area.

10. A ball screw mechanism as claimed in claim 8 or 9 characterised in that twenty holes (31) are provided in one nut (4) and twenty one holes (32) are provided on the other nut (5).

Fig.1

Fig.4

Fig. 2

Fig. 3

Fig.5

Fig.6

Fig.9

**23**

**8**

**23**

**34**

**31**

**6**

**4**

**31**

Fig.7

**20 32 31**

Fig.10

**5**

**32**

**6**

Fig.8

**35**